(19) Europäisches Patentamt
European Patent Office
Office européen des brevets

(11) **EP 4 261 944 A1**

(12) **EUROPEAN PATENT APPLICATION**
published in accordance with Art. 153(4) EPC

(43) Date of publication:
**18.10.2023 Bulletin 2023/42**

(21) Application number: **22856107.2**

(22) Date of filing: **04.08.2022**

(51) International Patent Classification (IPC):
*H01M 4/36* (2006.01)    *H01M 4/48* (2010.01)
*H01M 4/62* (2006.01)    *H01M 4/587* (2010.01)
*H01M 10/052* (2010.01)    *H01M 4/02* (2006.01)

(52) Cooperative Patent Classification (CPC):
**H01M 4/02; H01M 4/36; H01M 4/48; H01M 4/587;
H01M 4/62; H01M 10/052; H01M 10/0525;
Y02E 60/10**

(86) International application number:
**PCT/KR2022/011577**

(87) International publication number:
**WO 2023/018108 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.08.2021 KR 20210107522
03.02.2022 KR 20220014132**

(71) Applicant: **LG Energy Solution, Ltd.
Seoul 07335 (KR)**

(72) Inventors:
• **PARK, Heeyeon
Daejeon 34122 (KR)**
• **PARK, Semi
Daejeon 34122 (KR)**
• **CHOI, Junghyun
Daejeon 34122 (KR)**
• **SHIN, Sun Young
Daejeon 34122 (KR)**
• **OH, Ilgeun
Daejeon 34122 (KR)**
• **LEE, Yong Ju
Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE ACTIVE MATERIAL, METHOD FOR MANUFACTURING NEGATIVE ELECTRODE ACTIVE MATERIAL, NEGATIVE ELECTRODE COMPRISING NEGATIVE ELECTRODE ACTIVE MATERIAL, AND SECONDARY BATTERY COMPRISING SAME**

(57) The present invention relates to a negative electrode active material including: silicon-based composite particles including $SiO_x$ (0<x<2) and a Li compound; a carbon layer; and $SiO_y$ (1<y≤2), in which the carbon layer is provided in the form of coating at least a part of the surface of the silicon-based composite particles, and the $SiO_y$ (1<y≤2) is provided in the form of coating at least a part of the surface of the silicon-based composite particles or coating at least a part of the surface of the carbon layer, a preparation method thereof, a negative electrode including the negative electrode active material and a secondary battery including the negative electrode .

[Figure 1]

## Description

[Technical Field]

This application claims priority to and the benefit of Korean Patent Application Nos. 10-2021-0107522 and 10-2022-0014132 filed in the Korean Intellectual Property Office on August 13, 2021 and February 3, 2022, respectively, the entire contents of which are incorporated herein by reference.

The present invention relates to a negative electrode active material, a method for preparing a negative electrode active material, a negative electrode including the negative electrode active material and a secondary battery including the same.

[Background Art]

Recently, with the rapid spread of electronic devices using batteries such as mobile phones, notebook-sized computers, and electric vehicles, the demand for small and lightweight secondary batteries having relatively high capacity is rapidly increasing. In particular, lithium secondary batteries are lightweight and have high energy density, and thus have attracted attention as driving power sources for mobile devices. Accordingly, research and development efforts to improve the performance of lithium secondary batteries have been actively conducted.

In general, a lithium secondary battery includes a positive electrode, a negative electrode, a separator interposed between the positive electrode and the negative electrode, an electrolyte solution, an organic solvent and the like. Further, for the positive electrode and the negative electrode, an active material layer each including a positive electrode active material and a negative electrode active material may be formed on a current collector. In general, lithium-containing metal oxides such as $LiCoO_2$ and $LiMn_2O_4$ have been used as the positive electrode active material for the positive electrode, and lithium-free carbon-based active materials and silicon-based active materials have been used as the negative electrode active material for the negative electrode.

Among the negative electrode active materials, the silicon-based active material is attracting attention because the silicon based active material has a high capacity and excellent high-speed charging characteristics compared to the carbon-based active material. However, the silicon-based active material has a disadvantage in that the initial efficiency is low because the degree of volume expansion/contraction due to charging/discharging is large and the irreversible capacity is large.

Meanwhile, among the silicon-based active materials, a silicon-based oxide, specifically, a silicon-based oxide represented by $SiO_x$ (0<x<2) has an advantage in that the degree of volume expansion/contraction due to charging/discharging is low compared to other silicon-based active materials such as silicon (Si). However, the silicon-based oxide still has a disadvantage in that the initial efficiency is lowered depending on the presence of the irreversible capacity.

In this regard, studies have been continuously conducted to reduce irreversible capacity and improve initial efficiency by doping or intercalating a metal such as Li, Al, and Mg into silicon-based oxides. However, in the case of a negative electrode slurry including a metal-doped silicon-based oxide as a negative electrode active material, there is a problem in that the metal oxide formed by doping the metal reacts with moisture to increase the pH of the negative electrode slurry and change the viscosity thereof, and accordingly, there is a problem in that the state of the prepared negative electrode becomes poor and the charge/discharge efficiency of the negative electrode is reduced.

Accordingly, there is a need for the development of a negative electrode active material capable of improving the phase stability of a negative electrode slurry including a silicon-based oxide and improving the charge/discharge efficiency of a negative electrode prepared therefrom.

Korean Patent No. 10-0794192 relates to a method for preparing a carbon-coated silicon-graphite composite negative electrode material for a lithium secondary battery and a method for preparing a secondary battery including the same, but has a limitation in solving the above-described problems.

[Related Art Documents]

(Patent Document 1) Korean Patent No. 10-0794192

[Detailed Description of the Invention]

[Technical Problem]

The present invention relates to a negative electrode active material, a method for preparing a negative electrode active material, a negative electrode including the negative electrode active material and a secondary battery including the same.

[Technical Solution]

An exemplary embodiment of the present invention provides a negative electrode active material including: silicon-based composite particles including $SiO_x$ ($0<x<2$) and a Li compound; a carbon layer; and $SiO_y$ ($1<y\leq2$), in which the carbon layer is provided in the form of coating at least a part of the surface of the silicon-based composite particles, and the $SiO_y$ ($1<y\leq2$) is provided in the form of coating at least a part of the surface of the silicon-based composite particles or coating at least a part of the surface of the carbon layer.

An exemplary embodiment of the present invention provides a method for preparing the negative electrode active material, the method including: preparing silicon-based composite particles including $SiO_x$ ($0<x<2$) and a Li compound; and coating $SiO_y$ ($1<y\leq2$) on at least a part of the surface of the silicon-based composite particles by acid-treating the silicon-based composite particles.

An exemplary embodiment of the present invention provides a negative electrode including the negative electrode active material.

An exemplary embodiment of the present invention provides a secondary battery including the negative electrode.

[Advantageous Effects]

In the present invention, lithium by-products generated during a process of doping silicon-based composite particles with Li by acid-treating Li-doped silicon-based composite particles can be effectively removed, and in the acid treatment process, $SiO_y$ ($1<y\leq2$) is formed on the silicon-based composite particles, and thus plays a passivation role of the particles. $SiO_y$ ($1<y\leq2$) formed in this case can be provided in the form of coating at least a part of the surface of the carbon layer, or in the form of coating at least a part of the surface of the silicon-based composite particles. Specifically, the $SiO_y$ ($1<y\leq2$) can be provided in the form of coating at least a part of the surface of the silicon-based composite particles between the surface of the silicon-based composite particles and the carbon layer, provided in the form of coating at least a part of a region where the carbon layer is not provided on the surface of the silicon-based composite particles, or provided in the form of coating at least a part of the surface of the carbon layer.

Further, the silicon-based composite particles can include the carbon layer to prevent the elution of unreacted lithium by-products in the acid treatment process and minimize a reaction between a negative electrode active material and water in an aqueous slurry.

Therefore, a negative electrode including the negative electrode active material and a secondary battery including the negative electrode have an effect of improving the discharge capacity, initial efficiency, resistance performance and/or service life characteristics of the battery.

[Brief Description of the Drawings]

FIGS. 1 and 2 schematically illustrate the structure of a negative electrode active material according to an exemplary embodiment of the present invention, respectively.

FIGS. 3 and 4 relate to the XPS analysis results of the negative electrode active materials of Example 1 and Comparative Example 1, respectively.

[Explanation of Reference Numerals and Symbols]

1: Silicon-based composite particle
2: Carbon layer
3: $SiO_y$
4: Lithium by-product

[Best Mode]

Hereinafter, the present specification will be described in more detail.

When one part "includes" one constituent element in the present specification, unless otherwise specifically described, this does not mean that another constituent element is excluded, but means that another constituent element may be further included.

When one member is disposed "on" another member in the present specification, this includes not only a case where the one member is brought into contact with another member, but also a case where still another member is present between the two members.

Terms or words used in the specification should not be interpreted as being limited to typical or dictionary meaning and should be interpreted with a meaning and a concept which conform to the technical spirit of the present invention based on the principle that an inventor can appropriately define a concept of a term in order to describe his/her own invention in the best way.

Singular expressions of the terms used in the present specification include plural expressions unless they have definitely opposite meanings in the context.

In the present specification, the crystallinity of a structure included in a negative electrode active material may be confirmed by X-ray diffraction analysis, the X-ray diffraction analysis may be performed using an X-ray diffraction (XRD) analyzer (trade name: D4-endavor, manufacturer: Bruker), and in addition to the apparatus, an apparatus used in the art may be appropriately employed.

In the present specification, the presence or absence of an element and the content of the element in a negative electrode active material can be confirmed by ICP analysis, and the ICP analysis may be performed using an inductively coupled plasma atomic emission spectrometer (ICPAES, Perkin Elmer 7300).

In the present specification, a specific surface area may be measured by degassing gas from an object to be measured at 130°C for 2 hours using a BET measuring apparatus (BEL-SORP-MAX, Nippon Bell), and performing $N_2$ adsorption/desorption at 77 K.

In the present specification, an average particle diameter ($D_{50}$) may be defined as a particle diameter corresponding to 50% of a cumulative volume in a particle size distribution curve (graph curve of the particle size distribution map) of the particles. The average particle diameter ($D_{50}$) may be measured using, for example, a laser diffraction method. The laser diffraction method can generally measure a particle diameter of about several mm from the submicron region, and results with high reproducibility and high resolution may be obtained.

Hereinafter, preferred exemplary embodiments of the present invention will be described in detail. However, the exemplary embodiments of the present invention may be modified into various other forms, and the scope of the present invention is not limited to the exemplary embodiments which will be described below.

**<Negative electrode active material>**

An exemplary embodiment of the present invention provides a negative electrode active material including: silicon-based composite particles including $SiO_x$ ($0<x<2$) and a Li compound; a carbon layer; and $SiO_y$ ($1<y\leq2$), in which the carbon layer is provided in the form of coating at least a part of the surface of the silicon-based composite particles, and the $SiO_y$ ($1<y\leq2$) is provided in the form of coating at least a part of the surface of the silicon-based composite particles or coating at least a part of the surface of the carbon layer.

In general, lithium by-products formed by unreacted lithium in the process of doping silicon-based particles with Li are present on the particles, and thus become basic when a slurry is formed. Therefore, there is a problem in that rheological properties of the slurry are changed and the Si of the silicon-based particles reacts with a base to generate gas.

Therefore, in the present invention, lithium by-products formed during a process of doping silicon-based composite particles with Li by acid-treating the Li-doped silicon-based composite particles can be effectively removed, and in the acid treatment process, $SiO_y$ ($1<y\leq2$) is formed on the surface of the silicon-based composite particles, and thus plays a passivation role of the particles. $SiO_y$($1<y\leq2$) formed in this case may be provided in the form of coating at least a part of the surface of the silicon-based composite particles between the surface of the silicon-based composite particles and the carbon layer, provided in the form of coating at least a part of a region where the carbon layer is not provided on the surface of the silicon-based composite particles, or provided in the form of coating at least a part of the surface of the carbon layer.

Further, the silicon-based composite particles can include the carbon layer to prevent the elution of unreacted lithium by-products in the acid treatment process and minimize a reaction between a negative electrode active material and water in an aqueous slurry.

The negative electrode active material according to an exemplary embodiment of the present invention includes silicon-based composite particles. The silicon-based composite particles include $SiO_x$ ($0<x<2$) and a Li compound.

The $SiO_x$($0<x<2$) may correspond to a matrix in the silicon-based composite particle. The $SiO_x$ ($0<x<2$) may be in a form including Si and $SiO_2$, and the Si may also form a phase. That is, the x corresponds to the number ratio of O to Si included in the $SiO_x$ ($0<x<2$). When the silicon-based composite particles include the $SiO_x$ ($0<x<2$), the discharge capacity of a secondary battery may be improved.

In an exemplary embodiment of the present invention, the silicon-based composite particles may include a Li compound. The Li compound may correspond to a matrix in the silicon-based composite particle. The Li compound may be present in the form of at least one of a lithium atom, a lithium silicate, a lithium silicide, and a lithium oxide in the silicon-based composite particle. When the silicon-based composite particles include a Li compound, there is an effect that the initial efficiency is improved.

The Li compound is in a form in which the silicon-based composite particles are doped with the compound, and may be distributed on the surface and/or inside of the silicon-based composite particle. The Li compound is distributed on the surface and/or inside of the silicon-based composite particle, and thus may control the volume expansion/contraction of the silicon-based composite particles to an appropriate level, and may serve to prevent damage to the active material. Further, the Li compound may be contained in terms of reducing the ratio of the irreversible phase (for example, $SiO_2$) of the silicon-based oxide particles to increase the efficiency of the active material.

In an exemplary embodiment of the present invention, the Li compound may be present in the form of a lithium silicate. The lithium silicate is represented by $Li_aSi_bO_c$ ($2 \leq a \leq 4$, $0 < b \leq 2$, $2 \leq c \leq 5$) and may be classified into crystalline lithium silicate and amorphous lithium silicate. The crystalline lithium silicate may be present in the form of at least one lithium silicate selected from the group consisting of $Li_2SiO_3$, $Li_4SiO_4$ and $Li_2Si_2O_5$ in the silicon-based particles, and the amorphous lithium silicate may consist of a complex structure in the form of $Li_aSi_bO_c$ ($2 \leq a \leq 4$, $0 < b \leq 2$, $2 \leq c \leq 5$), and are not limited to the forms.

In an exemplary embodiment of the present invention, the Li may be included in an amount of 0.1 parts by weight to 40 parts by weight or 0.1 parts by weight to 25 parts by weight based on total 100 parts by weight of the negative electrode active material. Specifically, the Li may be included in an amount of 1 part by weight to 25 parts by weight, more specifically 2 parts by weight to 20 parts by weight. There is a problem in that as the content of Li is increased, the initial efficiency is increased, but the discharge capacity is decreased, so that when the content satisfies the above range, appropriate discharge capacity and initial efficiency may be implemented.

The content of the Li element may be confirmed by ICP analysis. Specifically, after a predetermined amount (about 0.01 g) of the negative electrode active material is aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of an element to be analyzed using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the contents of the elements of the prepared negative electrode active material may be analyzed by converting the total sum so as to be the theoretical value.

In an exemplary embodiment of the present invention, the silicon-based composite particles may include an additional metal atom. The metal atom may be present in the form of at least one of a metal atom, a metal silicate, a metal silicide, and a metal oxide in the silicon-based composite particle. The metal atom may include at least one selected from the group consisting of Mg, Li, Al and Ca. Accordingly, the initial efficiency of the negative electrode active material may be improved.

In an exemplary embodiment of the present invention, the negative electrode active material includes a carbon layer. Specifically, the carbon layer is provided in the form of coating at least a part of the surface of the silicon-based composite particles.

Specifically, by the carbon layer, conductivity is imparted to the negative electrode active material, and the initial efficiency, service life characteristics, and battery capacity characteristics of the secondary battery may be improved.

In an exemplary embodiment of the present invention, the carbon layer may include at least one of amorphous carbon and crystalline carbon.

In an exemplary embodiment of the present invention, the carbon layer may be an amorphous carbon layer. The amorphous carbon may suppress the expansion of the silicon-based composite particles by appropriately maintaining the strength of the carbon layer.

Further, the carbon layer may or may not include additional crystalline carbon.

The crystalline carbon may further improve the conductivity of the negative electrode active material. The crystalline carbon may include at least one selected in the group consisting of fullerene, carbon nanotubes and graphene.

The amorphous carbon may suppress the expansion of the silicon-based composite particles by appropriately maintaining the strength of the carbon layer. The amorphous carbon may be a carbide of at least one selected from the group consisting of tar, pitch and other organic materials, or may be a carbon-based material formed using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the carbon layer may be included in an amount of 0.1 parts by weight to 50 parts by weight, 0.1 parts by weight to 30 parts by weight or 0.1 parts by weight to 20 parts by weight, based on total 100 parts by weight of the negative electrode active material. More specifically, the carbon layer may be included in an amount of 0.5 parts by weight to 15 parts by weight or 1 part by weight to 10 parts by weight. When the above range is satisfied, it is possible to prevent a decrease in the capacity and efficiency of the negative electrode active material while improving conductivity.

In an exemplary embodiment of the present invention, the carbon layer may have a thickness of 1 nm to 500 nm, specifically 5 nm to 300 nm, and more specifically 5 nm to 100 nm. When the above range is satisfied, the conductivity of the negative electrode active material is improved, the volume change of the negative electrode active material is readily suppressed, and side reactions between an electrolyte solution and the negative electrode active material are suppressed, so that there is an effect the initial efficiency and/or service life of a battery is/are improved.

Specifically, the carbon layer may be formed by a chemical vapor deposition (CVD) method using at least one hydrocarbon gas selected from the group consisting of methane, ethane and acetylene.

The carbon layer may be formed before doping the silicon-based particles with lithium, or after doping the silicon-based particles with lithium.

In an exemplary embodiment of the present invention, the negative electrode active material includes $SiO_y$ ($1<y\leq2$). Specifically, the $SiO_y$ ($1<y\leq2$) is provided in the form of coating at least a part of the surface of the silicon-based composite particles, or coating at least a part of the surface of the carbon layer.

Specifically, in the present invention, lithium by-products formed during a process of doping silicon-based composite particles with Li by acid-treating the Li-doped silicon-based composite particles can be effectively removed, and in the acid treatment process, $SiO_y$ ($1<y\leq2$) is formed on the silicon-based composite particles, and thus plays a passivation role of the particles.

Further, the silicon-based composite particles can include the carbon layer to prevent the elution of unreacted lithium by-products in the acid treatment process and minimize a reaction between a negative electrode active material and water in an aqueous slurry.

The y in the $SiO_y$ ($1<y\leq2$) corresponds to the number ratio of O to Si included in the $SiO_y$ ($1<y\leq2$).

The $SiO_y$ ($1<y\leq2$) is formed during a process of preparing silicon-based composite particles, and then acid-treating lithium compounds remaining near the surface of the silicon-based composite particle or carbon layer, that is, lithium by-products. Specifically, lithium by-products are removed through acid treatment, lithium is deintercalated from lithium silicate near the surface of silicon-based composite particles, so that materials with various oxidation numbers are mixed to form a phase of $SiO_y$ ($1<y\leq2$).

The $SiO_y$ ($1<y\leq2$) may be present while forming an island-type or thin film-type layer, and may be present in various forms without being limited thereto.

In this case, $SiO_y$ ($1<y\leq2$) produced in the process of acid-treating the silicon-based particles may be present in various parts on the silicon-based composite particle. Specifically, the $SiO_y$ ($1<y\leq2$) may be provided in the form of coating at least a part of the surface of the silicon-based composite particles between the surface of the silicon-based composite particles and the carbon layer, provided in the form of coating at least a part of a region where the carbon layer is not provided on the surface of the silicon-based composite particles, or provided in the form of coating at least a part of the surface of the carbon layer.

In an example, the $SiO_y$ ($1<y\leq2$) may be provided in the form of coating at least a part of the surface of the silicon-based composite particles between the surface of the silicon-based composite particles and the carbon layer. That is, the $SiO_y$ ($1<y\leq2$) may be in the form of coating at least a part of the surface of the silicon-based composite particles, with a carbon layer being further coated on the SiOy. That is, the $SiO_y$ ($1<y\leq2$) may be provided adjacent to the surface of the silicon-based composite particles, and the carbon layer may be provided adjacent to the $SiO_y$ ($1<y\leq2$). The $SiO_y$ ($1<y\leq2$) may be in the form of partially coating the surface of the silicon-based composite particles, or coating the entire surface. Examples of the shape of $SiO_y$ ($1<y\leq2$) include an island type, a thin film type, or the like, but are not limited thereto.

In an example, the carbon layer may be in the form of partially coating the surface of $SiO_y$ ($1<y\leq2$), or coating the entire surface. Examples of the shape of the carbon layer include an island type, a thin film type, or the like, but are not limited thereto.

In an example, the $SiO_y$ ($1<y\leq2$) may be provided in the form of coating at least a part of a region where the carbon layer is not provided on the surface of the silicon-based composite particles. That is, the $SiO_y$ ($1<y\leq2$) may be provided adjacent to the surface of the silicon-based composite particles. The $SiO_y$ ($1<y\leq2$) may be in the form of partially coating the surface of the silicon-based composite particles, or coating the entire surface. Examples of the shape of $SiO_y$ ($1<y\leq2$) include an island type, a thin film type, or the like, but are not limited thereto.

Specifically, while the silicon-based composite particles are doped with lithium, the particles generally expand, so that there may be a region where the carbon layer cannot completely coat the silicon-based composite particles. In this case, the $SiO_y$ ($1<y\leq2$) formed during the process of acid-treating the silicon-based composite particles is formed on the region, and thus may be provided adjacent to the surface of the silicon-based composite particle, so that it is possible to more readily achieve the passivation of the silicon-based composite particles.

In an example, the $SiO_y$ ($1<y\leq2$) may be provided in the form of coating at least a part of the surface of the carbon layer. That is, the $SiO_y$ ($1<y\leq2$) may be provided adjacent to the surface of the carbon layer. The $SiO_y$ ($1<y\leq2$) may be in the form of partially coating the surface of the carbon layer, or coating the entire surface of the carbon layer. Examples of the shape of $SiO_y$ ($1<y\leq2$) include an island type, a thin film type, or the like, but are not limited thereto.

That is, the negative electrode active material may have a configuration in which silicon-based composite particles/carbon layer/$SiO_y$ ($1<y\leq2$) are coated in this order, or a configuration in which silicon-based composite particles/$SiO_y$ ($1<y\leq2$)/ carbon layer are coated in this order, or a configuration in which silicon-based composite particles/$SiO_y$ ($1<y\leq2$) are coated in this order, but the order is not limited thereto.

As described above, when lithium by-products remaining near the surface of the silicon-based composite particles or the carbon layer are acid-treated, it is possible to prevent a slurry from becoming basic due to lithium by-products, and there is an effect of improving a water-based processability of the slurry by preventing the Li compound included in the silicon-based composite particles from being eluted due to the passivation effect of $SiO_y$ ($1<y\leq2$) produced from the lithium by-products.

In an exemplary embodiment of the present invention, the negative electrode active material has a peak present between 101 eV to 104 eV when analyzed by X-ray photoelectron spectroscopy. This may be called a first peak. Specifically, the first peak appears in the vicinity of 102 eV to 103 eV, and may a peak due to $SiO_y$ ($1<y\leq2$).

In an exemplary embodiment of the present invention, the negative electrode active material has a second peak present between 99 eV to 101 eV when analyzed by X-ray photoelectron spectroscopy. Specifically, the second peak may appear in the vicinity of 99 eV to 100 eV, and may be a peak due to Si.

In an exemplary embodiment of the present invention, the negative electrode active material has a third peak present between 102 eV to 105 eV when analyzed by X-ray photoelectron spectroscopy. Specifically, the third peak may appear in the vicinity of 103 eV to 104 eV, and may be a peak due to $SiO_2$.

In an exemplary embodiment of the present invention, the first peak present between the second peak and the third peak. That is, the first peak is present between the second peak due to Si (oxidation number = 0) and the third peak due to $SiO_2$ (oxidation number = +4), and the negative electrode active material of the present invention includes Si having an oxidation number between 0 and +4 on the surface.

In an exemplary embodiment of the present invention, the negative electrode active material has a fourth peak present between 282 eV to 286 eV when analyzed by X-ray photoelectron spectroscopy. Specifically, the peak appears in the vicinity of 283 eV to 285 eV, and may be a peak due to carbon (C) of the carbon layer.

In the present invention, analysis of the negative electrode active material by X-ray photoelectron spectroscopy may be performed through Nexsa ESCA System, Thermo Fisher Scientific (ESCA-02).

Specifically, after a survey scan spectrum and a narrow scan spectrum are obtained for each sample, the survey scan spectrum and the narrow scan spectrum may be obtained while performing a depth profile. The depth profile may be performed up to 3000 seconds using monatomic Ar ions, and the measurement and data processing conditions are as follows.

- X-ray source: Monochromated Al K $\alpha$ (1486.6 eV)
- X-ray spot size: 400 $\mu$m
- Sputtering gun: Monatomic Ar (energy: 1000 eV, current: low, raster width: 2 mm)
- Etching rate: 0.09 nm/s for $Ta_2O_5$
- Operation Mode: CAE (Constant Analyzer Energy) mode
- Survey scan: pass energy 200 eV, energy step 1 eV
- Narrow scan: scanned mode, pass energy 50 eV, energy step 0.1 eV
- Charge compensation: flood gun off
- SF: Al THERMO1
- ECF: TPP-2M
- BG subtraction: Shirley

In an exemplary embodiment of the present invention, the depth profile of the X-ray photoelectron spectroscopy (XPS) may be measured by performing the spectroscopy under the X-ray source of the monochromated Al K $\alpha$ at 0.09 nm/s for up to 3000 seconds.

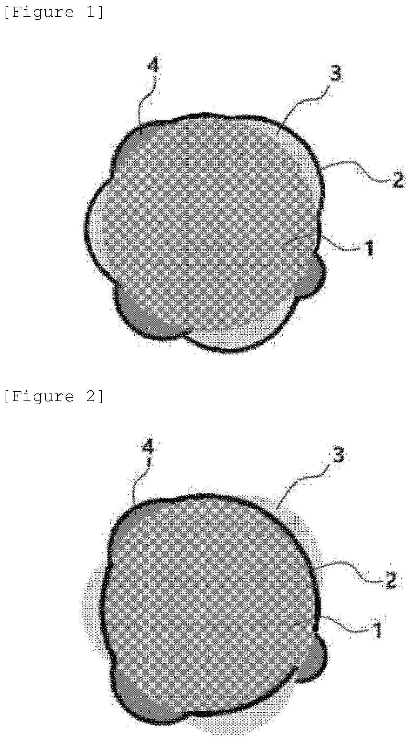

FIGS. 1 and 2 schematically illustrate the structure of a negative electrode active material according to an exemplary embodiment of the present invention, respectively. Specifically, at least a part of a silicon-based composite particle 1 is coated with $SiO_y$ (1<y≤2) 3, and at least a part of the $SiO_y$ (1<y≤2) 3 may be coated with a carbon layer 2. Alternatively, at least a part of a silicon-based composite particle 1 is coated with a carbon layer 2, and at least a part of the carbon layer 2 may be coated with $SiO_y$ (1<y≤2) 3. Furthermore, although not illustrated in FIGS. 1 and 2, a region where the carbon layer is not formed on the silicon-based composite particles may be coated with $SiO_y$ (1<y≤2).

In FIGS. 1 and 2, $SiO_y$ (1<y≤2) is illustrated as an island type shape in which the surface of the particles is partially coated, but other shapes may be shown without being limited thereto.

The negative electrode active material according to an exemplary embodiment of the present invention may include: a first surface layer provided on at least a part of the silicon-based composite particles; and a second surface layer provided on at least a part of the first surface layer.

The first surface layer may be in the form of coating at least a part of the silicon-based composite particles, that is, partially coating the surface of the particles, or entirely coating the surface of the particles. Examples of the shape of the first surface layer include an island type, a thin film type, or the like, but are not limited thereto.

The second surface layer may be in the form of coating at least a part of the first surface layer, that is, partially coating the surface of the first surface layer, or entirely coating the surface of the first surface layer. Examples of the shape of the second surface layer include an island type, a thin film type, or the like, but are not limited thereto.

The second surface layer may be additionally provided on at least a part of the silicon-based composite particles. That is, the second surface layer may be present in the form of additionally coating the portion of the silicon-based composite particles where the first surface layer is not provided, in addition to the first surface layer. For example, when the first surface layer is a carbon layer and the second surface layer is a layer including $SiO_y$ (1<y≤2), a layer including the $SiO_y$ (1<y≤2) may be formed on a region where the carbon layer cannot entirely coat the silicon-based composite particles.

In an exemplary embodiment of the present invention, the first surface layer is a carbon layer, and the second surface layer may be a layer including $SiO_y$ (1<y≤2). Specifically, the negative electrode active material includes a carbon layer provided on at least a part of the silicon-based composite particles, and may include a layer alyer including $SiO_y$ (1<y≤2) provided on at least a part of the carbon layer.

In an exemplary embodiment of the present invention, the first surface layer is a layer including $SiO_y$ (1<y≤2), and the second surface layer may be a carbon layer. Specifically, the negative electrode active material includes a layer including $SiO_y$ (1<y≤2) provided on at least a part of the silicon-based composite particles, and may include a carbon layer provided on at least a part of the layer including the $SiO_y$ (1<y≤2).

That is, $SiO_y$ (1<y≤2) formed by acid treatment may be provided in the form of a second surface layer on the surface of the carbon layer, or provided between the carbon layer and the surface of the silicon-based composite particles.

In addition, while the silicon-based composite particles are doped with lithium, the particles are generally expanded, so that there may be a region where the carbon layer cannot entirely coat the silicon-based composite particles, and the $SiO_y$ (1<y≤2) is formed on the region, and thus, may be provided adjacent to the surface of the silicon-based composite particles.

In an exemplary embodiment of the present invention, the carbon layer and $SiO_y$ (1<y≤2) may be provided adjacent to each other.

In an exemplary embodiment of the present invention, the first surface layer and the second surface layer may be provided adjacent to each other. That is, an additional layer may not be provided between the first surface layer and the second surface layer.

In an exemplary embodiment of the present invention, the $SiO_y$ (1<y≤2) may be provided in an amount of 0.01 parts by weight to 50 parts by weight based on total 100 parts by weight the negative electrode active material. Preferably, the $SiO_y$ (1<y≤2) may be provided in an amount of 0.1 parts by weight to 30 parts by weight, or 1 part by weight to 20 parts by weight. When the above range is satisfied, the water-based processability is improved, so that reduction in capacity and efficiency of the negative electrode active material may be prevented. When the content is lower than the above range, there is a problem in that the role of passivation cannot be properly played, and when the content is higher than the above range, there are problems in that the electrical conductivity deteriorates and the capacity and efficiency decrease.

The negative electrode active material according to an exemplary embodiment of the present invention includes $SiO_y$ (1<y≤2), and the $SiO_y$ (1<y≤2) may include $SiO_2$.

In an exemplary embodiment of the present invention, the $SiO_y$ (1<y≤2) may include an amorphous phase. In an example, no crystalline peak derived from $SiO_y$ (1<y≤2) is detected during the X-ray diffraction analysis of the negative electrode active material.

In an exemplary embodiment of the present invention, a weight ratio of Si : ($SiO_x$ (0<x<2) +$SiO_y$ (1<y≤2)) in the negative electrode active material may be 88 : 12 to 60 : 40. The weight ratio may be specifically 85 : 15 to 65 : 35, and more specifically 80 : 20 to 70 : 30. When the above range is satisfied, the $SiO_y$ coating the silicon-based composite particles in the negative electrode active material may more effectively coat the particles to prevent side reactions during the formation of a slurry.

In an exemplary embodiment of the present invention, during the NMR measurement of the negative electrode active material, a ratio (p1 : p2) of a Si peak intensity (p1) and a peak intensity (p2) indicating a Si-O bond may be 88 : 12 to 60 : 40. The ratio may be specifically 85 : 15 to 65 : 35, and more specifically 80 : 20 to 70 : 30. When the above range is satisfied, the $SiO_y$ coating the silicon-based composite particles in the negative electrode active material may more effectively coat the particles to prevent side reactions during the formation of a slurry.

The NMR peak intensity or weight ratio of the Si and silicon-based oxides ($SiO_x$ and $SiO_y$) may be confirmed under the condition of MAS rate = 10 kHz through nuclear magnetic resonance spectroscopy (Advance III HD 600 MHz NMR Spectrometer from Bruker).

In this case, the peak of Si may be measured in a chemical shift value range of -80 ppm to -90 ppm, and the peak of the Si-O bond may be measured in a chemical shift value range of -100 ppm to -120 ppm.

In an exemplary embodiment of the present invention, a weight ratio of the carbon layer and the $SiO_y$ ($1<y\leq2$) (carbon layer : $SiO_y$ ($1<y\leq2$)) may be 1 : 10 to 1 : 2. When the above range is satisfied, there is a passivation effect while maintaining an appropriate conductivity, and when the above range is not satisfied, there is a problem in that the conductivity deteriorates.

In an exemplary embodiment of the present invention, the negative electrode active material may further include a lithium by-product provided on at least a part of the silicon-based composite particles. The lithium-byproduct may include at least one selected from the group consisting of $Li_2O$, $LiOH$ and $Li_2CO_3$.

Specifically, the lithium by-product may mean a lithium compound remaining near the surface of the silicon-based composite particles or the carbon layer after preparing the silicon-based composite particles. As described above, even after the acid treatment process, a lithium by-product which has not been reacted with the acid may remain.

FIGS. 1 and 2 each schematically illustrate the structure of the negative electrode active material according to an exemplary embodiment of the present invention, and the negative electrode active material according to an exemplary embodiment of the present invention may be in a form in which the lithium by-product 4 is provided on at least a part of silicon-based composite particle 1, and a carbon layer 2 coats the lithium by-product 4. However, although FIGS. 1 and 2 illustrate that a lithium by-product is present, the lithium by-product may not be present.

The lithium by-product may be included in an amount of 5 parts by weight or less based on total 100 parts by weight of the negative electrode active material. Specifically, the lithium by-product may be included in an amount of 0 parts by weight or more and less than 5 parts by weight, more than 0 parts by weight and 5 parts by weight or less, 0.01 parts by weight or more and 5 parts by weight or less, 0.05 parts by weight or more and 2 parts by weight or less or 0.1 parts by weight or more and 1 part by weight or less. More specifically, the lithium by-product may be included in an amount of 0.1 parts by weight or more and 0.8 parts by weight or less or 0.1 parts by weight or more and 0.5 parts by weight or less. The lower limit of the content of the lithium by-product may be 0 parts by weight (not included), 0.01 parts by weight or 0.1 parts by weight, and the upper limit thereof may be 5 parts by weight, 1 part by weight, 0.8 parts by weight or 0.5 parts by weight. When the content of the lithium by-product satisfies the above range, side reactions in the slurry may be reduced, and the water-based processability may be improved by lowering the change in viscosity. In contrast, when the content of the lithium by-product is higher than the above range, there is a problem in that the slurry becomes basic during the slurry formation, which causes side reactions or changes in viscosity, and a water-based processability issue.

The content of the lithium by-product may be calculated by measuring the amount of a HCl solution in a specific interval where the pH changes during the process of titrating an aqueous solution including the negative electrode active material with the HCl solution using a titrator, and then calculating the amount of the lithium by-product.

A carbon layer may be additionally provided on at least a part of the surface of the lithium by-product. The carbon layer may be provided in the form of coating the lithium by-product. Specifically, the carbon layer may be formed during the preparation of the silicon-based composite particles, and the lithium by-product which has not been reacted with the acid may be present at the bottom of the carbon layer or at the top of the carbon layer.

In an exemplary embodiment of the present invention, the proportion of the amorphous phase may be 32% or more based on the total weight of the silicon-based composite particles and $SiO_y$ ($1<y\leq2$) in the negative electrode active material. Specifically, the proportion may be 32% to 70%, 35% to 60% or 35% to 55%.

As described above, since $SiO_y$ ($1<y\leq2$) produced by acid-treating the lithium by-products remaining near the surface of the silicon-based composite particles or the carbon layer includes an amorphous phase, the proportion of amorphous phase in the negative electrode active material after the acid treatment is increased. Therefore, when the weight ratio of amorphous phase based on the total weight of the silicon-based composite particles and $SiO_y$ ($1<y\leq2$) in the negative electrode active material satisfies the above range, a layer including $SiO_y$ ($1<y\leq2$) is properly formed, and there is an effect of improving passivation characteristics.

The proportion of the amorphous phase in the negative electrode active material may be measured by quantitative analysis through a X-ray diffraction analysis method (D4 Endeavor from Bruker)

The negative electrode active material may have a BET specific surface area of 1 m²/g or more and 20 m²/g or less, 1 m²/g or more and 15 m²/g or less, more than 2 m²/g and less than 10 m²/g, and 2.5 m²/g or more and 8 m²/g or less. The upper limit of the BET specific surface area may be 20 m$^2$/g, 18 m$^2$/g, 15 m$^2$/g, 10 m$^2$/g, 8 m$^2$/g, 5 m$^2$/g or 4 m$^2$/g, and the lower limit thereof may be 1 m$^2$/g, 1.5 m$^2$/g, 2 m$^2$/g or 2.5 m$^2$/g.

The negative electrode active material may have an average particle diameter (D$_{50}$) of 0.1 um to 30 um, specifically 1 um to 20 $\mu$m, and more specifically 1 um to 10 um. When the above range is satisfied, the active material during charging and discharging is ensured to be structurally stable, and it is possible to prevent a problem in that the volume expansion/contraction level also becomes large as the particle diameter is excessively increased, and to prevent a problem in that the initial efficiency is reduced because the particle diameter is excessively small.

<Preparation method of negative electrode active material>

An exemplary embodiment of the present invention provides a method for preparing a negative electrode active material, the method including: preparing silicon-based composite particles including SiO$_x$ (0<x<2) and a Li compound; and forming SiO$_y$ (1<y≤2) by acid-treating the silicon-based composite particles.

The silicon-based composite particles may be formed through forming preliminary particles by heating and vaporizing a Si powder and a SiO2 powder under vacuum, and then depositing the vaporized mixed gas; and mixing the preliminary particles with a Li powder, and then heat-treating the resulting mixture.

In this case, the step may include forming a carbon layer. The forming of the carbon layer may be performed after forming preliminary particles and before mixing the preliminary particles with the Li powder, or may be performed after the mixing of the preliminary particles with the Li powder, and then the heat-treating of the resulting mixture.

Alternatively, the silicon-based composite particles may be formed through forming preliminary particles by heating and vaporizing a Si powder and a SiO$_2$ powder under vacuum, and then depositing the vaporized mixed gas; and mixing the preliminary particles with a Li powder, and then heat-treating the resulting mixture.

Specifically, the mixed powder of the Si powder and the SiO$_2$ powder may be heat-treated at 1,400°C to 1,800°C or 1,400°C to 1,600°C under vacuum.

The formed preliminary particles may be present in the form of SiO$_x$ (x=1).

The silicon-based composite particles may include the above-described Li silicates, Li silicides, Li oxides, and the like.

The particle size of the silicon-based composite particles may be adjusted by a method such as a ball mill, a jet mill, or an air current classification, and the method is not limited thereto.

In the forming of the carbon layer, the carbon layer may be prepared by using a chemical vapor deposition (CVD) method using a hydrocarbon gas, or by carbonizing a material to be used as a carbon source.

Specifically, the carbon layer may be formed by introducing the formed preliminary particles into a reaction furnace, and then subjecting a hydrocarbon gas to chemical vapor deposition (CVD) at 600 to 1,200°C. The hydrocarbon gas may be at least one hydrocarbon gas selected from the group consisting of methane, ethane, propane and acetylene, and may be heat-treated at 900°C to 1,000°C.

In this case, when the preparing of the silicon-based composite particles does not include forming a carbon layer, it is possible to further include forming a carbon layer on the acid-treated particles after the acid treatment step.

In order to remove lithium by-products remaining in the process of forming the silicon-based composite particles, the acid-treating of the silicon-based composite particles may be performed.

In the acid treatment process, the silicon-based composite particles and the acid may be mixed at a weight ratio of 80 : 20 to 99.9 : 0.01. Specifically, the silicon-based composite particles and the acid may be mixed at a weight ratio of 85 : 15 to 99.5 : 0.5, 90 : 10 to 99.5 : 0.5 or 95 : 5 to 99 : 1.

As an acid during the acid treatment, phosphoric acid (H$_3$PO$_4$), sulfuric acid (H$_2$SO$_4$), boric acid (H$_3$BO$_3$), citric acid, protonated aniline, and the like may be used, and specifically, phosphoric acid (H$_3$PO$_4$) may be used. However, the acid is not limited thereto, and any configuration known in the art may be appropriately employed.

As a solvent during the acid treatment, distilled water, alcohol, N-methylpyrrolidone (NMP) and the like may be used, and for example, ethanol may be used. However, the solvent is not limited thereto, and any configuration known in the art may be appropriately employed depending on the type of acid.

The acid treatment may be performed in a range of 50°C to 200°C, but the temperature is not limited thereto, and the acid treatment temperature may vary depending on the types of acid and solvent. For example, when ethanol is used as the solvent, the acid treatment may be performed at 60°C to 100°C or less, or 70°C to 90°C or less.

An unreacted lithium compound, that is, a lithium by-product remains during the preparation of the silicon-based composite particles, and remains near the surface of the silicon-based composite particles or the carbon layer. Therefore, when the silicon-based composite particles are acid-treated, the remaining lithium by-product reacts with the acid and is removed, and Li is deintercalated from lithium silicate near the surface of the silicon-based composite particles, resulting in the formation of SiO$_y$ (1<y≤2).

The formed SiO$_y$ (1<y≤2) may be provided in the form of coating at least a part of the surface of the silicon-based composite particles, provided in the form of coating at least a part of a region where the carbon layer is not provided on the surface of the silicon-based composite particles, or provided in the form of coating at least a part of the surface of the carbon layer.

As described above, lithium by-products formed during a Li doping process by acid-treating silicon-based composite particles may be effectively removed, and in the acid treatment process, $SiO_y$ (1<y≤2) is formed on the silicon-based composite particles, and thus plays a passivation role of the particles.

The $SiO_y$ (1<y≤2) formed through the acid treatment process may be present while forming an island-type or thin film-type layer, and may be present in various forms without being limited thereto. Furthermore, the formed $SiO_y$ (1<y≤2) may be present in various parts on the silicon-based composite particle.

That is, the negative electrode active material formed by the preparation method described above may have a configuration in which silicon-based composite particles/carbon layer/$SiO_y$ (1<y≤2) are coated in this order, or a configuration in which silicon-based composite particles/$SiO_y$ (1<y≤2)/ carbon layer are coated in this order, or a configuration in which silicon-based composite particles/$SiO_y$ (1<y≤2) are coated in this order, but the order is not limited thereto.

Since it is possible to effectively remove lithium by-products remaining in the silicon-based composite particles and effectively passivate the particles by forming a layer including $SiO_y$ (1<y≤2) as described above, there is an effect of improving the water-based processability by preventing the Li compound included in the silicon-based composite particles from being eluted.

Further, the silicon-based composite particles can include the carbon layer to prevent the elution of unreacted lithium by-products in the acid treatment process and minimize a reaction between a negative electrode active material and water in an aqueous slurry.

**<Negative electrode>**

The negative electrode according to an exemplary embodiment of the present invention may include the above-described negative electrode active material.

Specifically, the negative electrode may include a negative electrode current collector and a negative electrode active material layer disposed on the negative electrode current collector. The negative electrode active material layer may include the negative electrode active material. Furthermore, the negative electrode active material layer may further include a binder and/or a conductive material.

The negative electrode active material layer may be formed by applying a negative electrode slurry including a negative electrode active material, a binder and/or a conductive material to at least one surface of a negative electrode current collector and drying and rolling the negative electrode current collector.

The negative electrode slurry includes the negative electrode active material, the binder and/or the conductive material.

The negative electrode slurry may further include an additional negative electrode active material.

As the additional negative electrode active material, a compound capable of reversible intercalation and deintercalation of lithium may be used. Specific examples thereof include a carbonaceous material such as artificial graphite, natural graphite, graphized carbon fiber, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be undoped and doped with lithium such as $SiO_\beta$ (0 < β < 2), $SnO_2$, vanadium oxide, lithium titanium oxide, and lithium vanadium oxide; or a composite including the metallic compound and the carbonaceous material such as a Si-C composite or a Sn-C composite, and the like, and any one thereof or a mixture of two or more thereof may be used. Furthermore, a metallic lithium thin film may be used as the negative electrode active material. Alternatively, both low crystalline carbon and high crystalline carbon, and the like may be used as the carbon material. Typical examples of the low crystalline carbon include soft carbon and hard carbon, and typical examples of the high crystalline carbon include irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

The additional negative electrode active material may be a carbon-based negative electrode active material.

In an exemplary embodiment of the present invention, a weight ratio of the negative electrode active material and the additional negative electrode active material included in the negative electrode slurry may be 10:90 to 90:10, specifically 10:90 to 50:50.

The negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or a material in which aluminum or stainless steel whose surface is surface-treated with carbon, nickel, titanium, silver, and the like. Specifically, a transition metal, such as copper or nickel which adsorbs carbon well, may be used as a current collector. Although the current collector may have a thickness of 6 um to 20 μm, the thickness of the current collector is not limited thereto.

The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene-butadiene rubber (SBR), fluorine rubber, polyacrylic acid and a material in which the hydrogen thereof is substituted with Li, Na, Ca, or the like, and may also include various copolymers thereof.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a carbon fluoride powder, an aluminum powder, and a nickel powder; a conductive whisker such as zinc oxide and potassium titanate; a conductive metal oxide such as titanium oxide; a conductive material such as polyphenylene derivatives, and the like.

The negative electrode slurry may further include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

**<Secondary battery>**

A secondary battery according to an exemplary embodiment of the present invention may include the above-described negative electrode according to an exemplary embodiment. Specifically, the secondary battery may include a negative electrode, a positive electrode, a separator interposed between the positive electrode and the negative electrode, and an electrolyte solution, and the negative electrode is the same as the above-described negative electrode. Since the negative electrode has been previously described, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{v3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte solution is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte solution include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte solution may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl car-bonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte solution having a high electric conductivity, therefore such a combined use is more preferable.

As the metal salt, a lithium salt may be used, the lithium salt is a material which is easily dissolved in the non-aqueous electrolyte solution, and for example, as an anion of the lithium salt, it is possible to use one or more selected from the group consisting of F⁻, Cl⁻, I⁻, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN⁻ and $(CF_3CF_2SO_2)_2N^-$.

In the electrolyte solution, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte solution constituent components.

According to still another exemplary embodiment of the present invention, provided are a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

[Mode for Invention]

Hereinafter, the present specification will be described in detail with reference to Examples for specifically describing the present specification. However, the Examples according to the present specification may be modified in various forms, and it is not interpreted that the scope of the present application is limited to the Examples described in detail below. The Examples of the present application are provided to explain the present specification more completely to a person with ordinary skill in the art.

**<Examples and Comparative Examples>**

Example 1

After 94 g of a powder in which Si and $SiO_2$ were mixed at a molar ratio of 1 : 1 was mixed in a reaction furnace, the resulting mixture was heated under vacuum at a sublimation temperature of 1,400°C. Thereafter, a mixed gas of the vaporized Si and $SiO_2$ was reacted in a cooling zone in a vacuum state having a cooling temperature of 800°C and condensed into a solid phase. Next, silicon-based particles having a size of 6 um were prepared by pulverizing the aggregated particles using a ball mill for 3 hours. Thereafter, the silicon-based particles were positioned in a hot zone of a CVD apparatus while maintaining an inert atmosphere by flowing Ar gas, and the methane was blown into the hot zone at 900°C using Ar as a carrier gas and reacted at $10^{-1}$ torr for 20 minutes to form a carbon layer on the surface. Thereafter, 6 g of a Li metal powder was added, an additional heat treatment was performed at a temperature of 800°C in an inert atmosphere, and then an acid treatment was performed at a weight ratio of silicon-based particles : phosphoric acid = 99 : 1 at a temperature of 80°C using ethanol as a solvent to prepare a negative electrode active material in which $SiO_y$ ($1<y\leq2$) was formed on the surface of the particles.

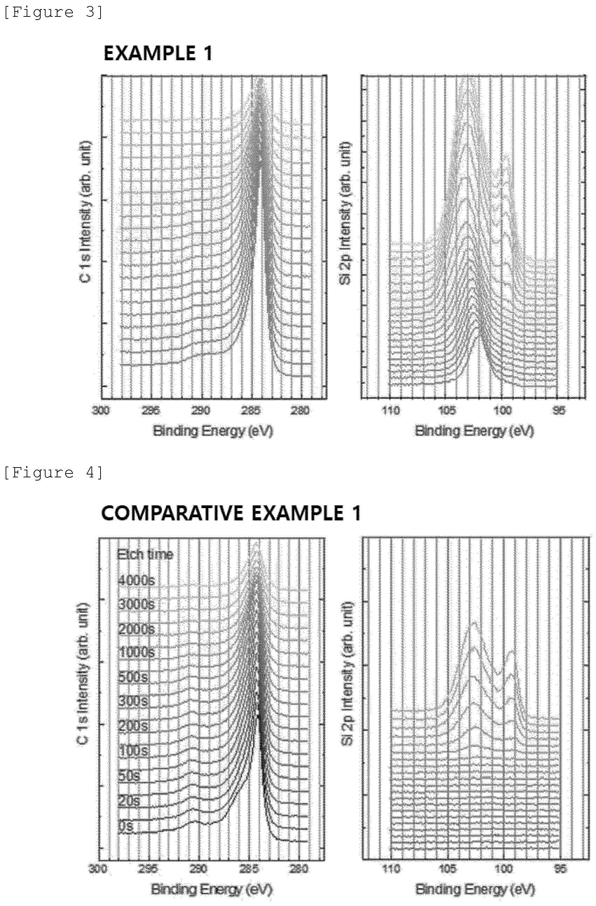

As a result of XPS analysis of the negative electrode active material, as illustrated in FIG. 3, a first peak in the vicinity of 102 eV to 103 eV, a second peak in the vicinity of 99 eV to 100 eV, a third peak in the vicinity of 103 eV to 104 eV, and a fourth peak in the vicinity of 283 eV to 285 eV were obtained.

**Example 2**

A negative electrode active material was prepared in the same manner as in Example 1, except that a process of performing a heat treatment by introducing methane was performed for 1 hour.

As a result of XPS analysis of the negative electrode active material, a first peak in the vicinity of 102 eV to 103 eV, a second peak in the vicinity of 99 eV to 100 eV, a third peak in the vicinity of 103 eV to 104 eV, and a fourth peak in the vicinity of 283 eV to 285 eV were obtained.

**Example 3**

A negative electrode active material was prepared in the same manner as in Example 1, except that a process of performing a heat treatment by introducing methane was changed after an acid treatment.

As a result of XPS analysis of the negative electrode active material, a first peak in the vicinity of 102 eV to 103 eV, a second peak in the vicinity of 99 eV to 100 eV, a third peak in the vicinity of 103 eV to 104 eV, and a fourth peak in the vicinity of 283 eV to 285 eV were obtained.

**Example 4**

A negative electrode active material was prepared in the same manner as in Example 1, except that a temperature at which the heat treatment was performed by introducing methane was changed to 1,100°C.

As a result of XPS analysis of the negative electrode active material, a first peak in the vicinity of 102 eV to 103 eV, a second peak in the vicinity of 99 eV to 100 eV, a third peak in the vicinity of 103 eV to 104 eV, and a fourth peak in the vicinity of 283 eV to 285 eV were obtained.

**Example 5**

A negative electrode active material was prepared in the same manner as in Example 1, except that the acid treatment was performed at a weight ratio of silicon-based composite particles : phosphoric acid = 90 : 10.

As a result of XPS analysis of the negative electrode active material, a first peak in the vicinity of 102 eV to 103 eV, a second peak in the vicinity of 99 eV to 100 eV, a third peak in the vicinity of 103 eV to 104 eV, and a fourth peak in the vicinity of 283 eV to 285 eV were obtained.

**Comparative Example 1**

A negative electrode active material was prepared in the same manner as in Example 1, except for the acid treatment process. The formed negative electrode active material does not include $SiO_y$ ($1<y\leq2$).

As a result of XPS analysis of the negative electrode active material, as illustrated in FIG. 4, a second peak in the vicinity of 99 eV to 100 eV, a third peak in the vicinity of 103 eV to 104 eV, and a fourth peak in the vicinity of 283 eV to 285 eV were obtained.

**Comparative Example 2**

A negative electrode active material was prepared in the same manner as in Example 1, except for the process of introducing methane and performing the heat treatment.

As a result of XPS analysis of the negative electrode active material, a first peak in the vicinity of 102 eV to 103 eV, a second peak in the vicinity of 99 eV to 100 eV, and a third peak in the vicinity of 103 eV to 104 eV were obtained.

The configurations of the negative electrode active materials prepared in the Examples and Comparative Examples are shown in the following Table 1.

[Table 1]

| | Part by weight of carbon layer (based on total 100 parts by weight of negative electrode active material) | Si peak intensity: Si-O peak intensity (Si: (SiOx+SiOy) weight ratio) | Part by weight of lithium by-product (based on total 100 parts by weight of negative electrode active material) | Part by weight of Li (based on 100 parts by weight of negative electrode active material) | Proportion of amorphous phase based on total weight of silicon-based composite particles + SiOy ($1<y\leq2$) | $D_{50}$ ($\mu$m) of negative electrode active material | Specific surface area ($m^2$/g) of negative electrode active material |
|---|---|---|---|---|---|---|---|
| Example 1 | 5.8 | 78 : 22 | 0.15 | 6.5 | 44 | 5.0 | 2.8 |
| Example 2 | 8.9 | 84 : 16 | 0.14 | 6.2 | 43 | 5.2 | 2.5 |
| Example 3 | 6.2 | 74 : 26 | 0.12 | 5.6 | 44 | 4.9 | 2.7 |
| Example 4 | 6.0 | 86 : 14 | 0.14 | 6.6 | 38 | 5.1 | 2.6 |
| Example 5 | 6.0 | 69 : 31 | 0.10 | 6.2 | 50 | 5.0 | 2.7 |
| Comparative Example 1 | 6.1 | 90 : 10 | 0.92 | 7.1 | 31 | 4.9 | 2.7 |
| Comparative Example 2 | - | 77 : 23 | 0.18 | 6.8 | 46 | 4.9 | 2.9 |

Analysis of the negative electrode active material by X-ray photoelectron spectroscopy was performed through Nexsa ESCA System, Thermo Fisher Scientific (ESCA-02). Specifically, after a survey scan spectrum and a narrow scan spectrum were obtained for each sample, the survey scan spectrum and the narrow scan spectrum were obtained while performing a depth profile. The depth profile was performed up to 3000 seconds using monatomic Ar ions, and the measurement and data processing conditions are as follows.

- X-ray source: Monochromated Al K $\alpha$ (1486.6 eV)
- X-ray spot size: 400 $\mu$m
- Sputtering gun: Monatomic Ar (energy: 1000 eV, current: low, raster width: 2 mm)
- Etching rate: 0.09 nm/s for $Ta_2O_5$
- Operation Mode: CAE (Constant Analyzer Energy) mode
- Survey scan: pass energy 200 eV, energy step 1 eV
- Narrow scan: scanned mode, pass energy 50 eV, energy step 0.1 eV
- Charge compensation: flood gun off
- SF: Al THERMO1
- ECF: TPP-2M
- BG subtraction: Shirley

The particle size of the negative electrode active material was analyzed by a laser diffraction particle size analysis method using a Microtrac S3500 device.

The content of the Li atom was confirmed by an ICP analysis using an inductively coupled plasma atomic emission spectrometer (ICP-OES, AVIO 500 from Perkin-Elmer 7300).

The presence and content of the carbon layer were confirmed under oxygen conditions by an elemental analysis method through combustion (G4 ICARUS from Bruker).

The NMR peak intensity or weight ratio of the Si and silicon-based oxides ($SiO_x$ and $SiO_y$) was confirmed under the condition of MAS rate = 10 kHz through nuclear magnetic resonance spectroscopy (Advance III HD 600 MHz NMR Spectrometer from Bruker).

The content of the lithium by-product was measured while titrating eluted components with a HCl solution by adding a sample to distilled water, and then filtering the resulting product by the Karl Fischer titration method (Titrator Excellence T5 from Mettler Toledo).

The proportion of the total amorphous phase in the negative electrode active material was measured by quantitative analysis through a X-ray diffraction analysis method (D4 Endeavor from Bruker)

**<Experimental Example: Evaluation of discharge capacity, initial efficiency, and service life (capacity retention rate) characteristics>**

Negative electrodes and batteries were prepared using the negative electrode active materials in the Examples and the Comparative Examples, respectively.

A mixture was prepared by mixing the negative electrode active material, a conductive material carbon black, and a binder polyacrylic acid (PAA) at a weight ratio of 80:10:10. Thereafter, 7.8 g of distilled water was added to 5 g of the mixture, and then the resulting mixture was stirred to prepare a negative electrode slurry. The negative electrode slurry was applied to a copper (Cu) metal thin film which is a negative electrode current collector having a thickness of 20 um and dried. In this case, the temperature of the circulating air was 60°C. Subsequently, a negative electrode was prepared by roll pressing the negative electrode current collector and drying the negative electrode current collector in a vacuum oven at 130°C for 12 hours.

The prepared negative electrode was cut into a circle of 1.7671 cm2. A lithium (Li) metal thin film was used as a positive electrode. A porous polyethylene separator was interposed between the positive electrode and the negative electrode, an electrolyte solution in which vinylene carbonate was dissolved in 0.5 parts by weight in a mixed solution of ethyl methyl carbonate (EMC) and ethylene carbonate (EC) at a mixed volume ratio of 7 : 3, and $LiPF_6$ having a concentration of 1 M was dissolved, was injected thereinto to prepare a lithium coin half-cell.

The discharge capacity, initial efficiency, and capacity retention rate were evaluated by charging and discharging the prepared battery, and are shown in the following Table 2.

For the 1st and 2nd cycles, the battery was charged and discharged at 0.1 C, and from the 3rd cycle to the 49th cycle, the battery was charged and discharged at 0.5 C. The 50th cycle was completed in a charged state (with lithium contained in the negative electrode).

Charging conditions: CC (constant current)/CV (constant voltage) (5 mV/0.005 C current cut-off)
Discharging conditions: CC (constant current) conditions 1.5 V

The discharge capacity (mAh/g) and initial efficiency (%) were derived from the results during one-time charge/discharge. Specifically, the initial efficiency (%) was derived by the following calculation.

$$\text{Initial efficiency (\%) = (1 time discharge capacity / 1 time charge capacity)} \times 100$$

The capacity retention rate was each derived by the following calculation.

$$\text{Capacity retention rate (\%) = (49 times discharge capacity / 1 time discharge capacity)} \times 100$$

**<Experimental Example: Evaluation of processability (shear viscosity) characteristics>**

As part of the processability evaluation, the amounts of change in shear viscosity at shear rate = 1 Hz of a slurry prepared by mixing graphite : the negative electrode active material : carbon black : CMC : PAA at a weight ratio of 77 : 20 : 1 : 1 : 1 were measured, and are shown in the following Table 2. Specifically, the amount (%) of change in the shear viscosity was derived by the following equation.

$$\text{Amount (\%) of change in shear viscosity} = ((\text{shear}$$

$$\text{viscosity of slurry after 48 h} - \text{shear viscosity of slurry}$$

$$\text{immediately after mixing) / shear viscosity of slurry}$$

$$\text{immediately after mixing)} \times 100$$

[Table 2]

| Battery | Discharge capacity (mAh/g) | Initial efficiency (%) | Capacity retention rate (%) | Amount (%) of change in shear viscosity |
|---|---|---|---|---|
| Example 1 | 1418 | 88 | 83 | -18 |
| Example 2 | 1343 | 87 | 77 | -19 |
| Example 3 | 1378 | 86 | 79 | -16 |
| Example 4 | 1365 | 83 | 70 | -17 |
| Example 5 | 1350 | 83 | 72 | -20 |
| Comparative Example 1 | 1321 | 90 | 66 | -29 |
| Comparative Example 2 | 1340 | 82 | 64 | -25 |

The negative electrode active material according to the present invention is characterized by having a carbon layer and $SiO_y$ ($1<y\leq2$) on a silicon-based composite particle, has a low content of lithium by-products in the negative electrode active material and has an excellent passivation effect due to the carbon layer and the layer including $SiO_y$ ($1<y\leq2$).

In Table 2, in Examples 1 to 5, the content of lithium by-products in the negative electrode active material through acid treatment is low, and the formation of $SiO_y$ ($1<y\leq2$) results in an increase in the proportion of the amorphous phase in the negative electrode active material. It could be confirmed that in Examples 1 to 5, the negative electrode active materials had a low content of lithium by-products in the negative electrode active material, and due to the passivation effect by $SiO_y$ ($1<y\leq2$), the overall discharge capacity, initial efficiency, and capacity retention rate were better than those of the Comparative Example. Furthermore, it could be confirmed that by minimizing the effect of the lithium compound eluted from the lithium by-products or silicon-based composite particles by $SiO_y$ ($1<y\leq2$), the amount of change in the shear viscosity of the slurry was also significantly lower than in Comparative Examples 1 and 2.

Conversely, in Comparative Example 1, the acid treatment was not performed, and $SiO_y$ ($1<y\leq2$) was not formed from lithium by-products. It could be confirmed that in the case of Comparative Example 1, the initial efficiency was slightly higher than those of the Examples due to the higher content of lithium than that of Examples, but the discharge capacity and the capacity retention rate were remarkably lower and the amount of change in shear viscosity was remarkably larger than those in the Examples because side reactions of the slurry occur due to the lithium by-product and the viscosity of the slurry is changed.

Since the carbon layer is not included in the case of Comparative Example 2, expansion of the silicon-based composite particles cannot be prevented, the conductivity is low, and the silicon-based composite particles cannot be effectively coated. Therefore, it could be confirmed that since an appropriate capacity could not be exhibited, the lithium by-product that was not coated with the carbon layer caused a side reaction of the slurry, and the viscosity of the slurry was changed by the volume expansion of the negative electrode active material during charging/discharging, the discharge capacity and the capacity retention rate were remarkably lower and the amount of change in shear viscosity was remarkably larger than those of the Examples.

Therefore, the present invention could effectively remove lithium by-products by providing a negative electrode active material in which a carbon layer and $SiO_y$ ($1<y\leq2$) are provided on a silicon-based composite particles, and easily improve the overall water-based processability, discharge capacity, efficiency and capacity retention rate using a passivation effect.

**Claims**

1.  A negative electrode active material comprising:

    silicon-based composite particles comprising $SiO_x$, wherein $0<x<2$, and a Li compound; a carbon layer; and $SiO_y$, wherein $1<y\leq2$,
    wherein the carbon layer is provided in a form of coating at least a part of the surface of the silicon-based composite particles, and
    the $SiO_y$, wherein $1<y\leq2$, is provided in a form of coating at least a part of the surface of the silicon-based composite particles, or coating at least a part of the surface of the carbon layer.

2.  The negative electrode active material of claim 1, wherein the negative electrode active material has a peak present at 101 eV to 104 eV when analyzed by X-ray photoelectron spectroscopy.

3.  The negative electrode active material of claim 1, wherein the $SiO_y$, wherein $1<y\leq2$, is provided in a form of coating at least a part of the surface of the silicon-based composite particles between the surface of the silicon-based composite particles and the carbon layer, provided in a form of coating at least a part of a region where the carbon layer is not provided on the surface of the silicon-based composite particles, or provided in a form of coating at least a part of the surface of the carbon layer.

4.  The negative electrode active material of claim 1, wherein the $SiO_y$ ($1<y\leq2$) is comprised in an amount of 0.1 parts by weight to 50 parts by weight based on total 100 parts by weight of the negative electrode active material.

5.  The negative electrode active material of claim 1, further comprising a lithium by-product provided on at least a part of the silicon-based composite particles.

6.  The negative electrode active material of claim 5, wherein the lithium by-product is comprised in an amount of 5 parts by weight or less based on total 100 parts by weight of the negative electrode active material.

7.  The negative electrode active material of claim 5, further comprising a carbon layer provided on at least a part of the lithium by-product.

8.  The negative electrode active material of claim 1, wherein during an NMR measurement of the negative electrode active material, a ratio (p1 : p2) of a Si peak intensity (p1) and a peak intensity (p2) indicating a Si-O bond is 88 : 12 to 60 : 40.

9.  The negative electrode active material of claim 1, wherein a proportion of an amorphous phase is 32% or more based on a total weight of the silicon-based composite particles and the $SiO_y$ ($1<y\leq2$).

10. The negative electrode active material of claim 1, wherein Li comprised in the silicon-based composite particles is comprised in an amount of 0.1 parts by weight to 40 parts by weight based on total 100 parts by weight of the negative electrode active material.

11. The negative electrode active material of claim 1, wherein the carbon layer is comprised in an amount of 0.1 parts by weight to 20 parts by weight based on total 100 parts by weight of the negative electrode active material.

12. A method for preparing the negative electrode active material according to any one of claims 1 to 11, the method comprising:

    preparing silicon-based composite particles comprising $SiO_x$, wherein $0<x<2$, and a Li compound; and
    forming $SiO_y$, wherein $1<y\leq2$, by acid-treating the silicon-based composite particles.

13. A negative electrode comprising the negative electrode active material according to any one of claims 1 to 11.

14. A secondary battery comprising the negative electrode according to claim 13.

[Figure 1]

[Figure 2]

[Figure 3]

**EXAMPLE 1**

[Figure 4]

**COMPARATIVE EXAMPLE 1**

## INTERNATIONAL SEARCH REPORT

| | International application No. |
|---|---|
| | **PCT/KR2022/011577** |

**A.    CLASSIFICATION OF SUBJECT MATTER**

**H01M 4/36**(2006.01)i; **H01M 4/48**(2010.01)i; **H01M 4/62**(2006.01)i; **H01M 4/587**(2010.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/36(2006.01); C01B 32/05(2017.01); C01B 32/158(2017.01); H01M 10/052(2010.01); H01M 4/38(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘(silicone), 탄소층(carbon layer), 산처리(acid treatment)

**C.    DOCUMENTS CONSIDERED TO BE RELEVANT**

| Category* | Citation of document, with indication, where appropriate, of the relevant passages | Relevant to claim No. |
|---|---|---|
| Y<br><br>A | KR 10-2018-0114061 A (SHIN-ETSU CHEMICAL CO., LTD.) 17 October 2018 (2018-10-17)<br>See claims 1, 8-9 and 13-14; and paragraphs [0092] and [0142]-[0147]. | 1-8,10-11,13-14<br><br>9,12 |
| Y | KR 10-1020909 B1 (PANASONIC CORPORATION) 09 March 2011 (2011-03-09)<br>See claim 1; and figure 1. | 1-8,10-11,13-14 |
| Y | JP 2014-532267 A (LG CHEM, LTD.) 04 December 2014 (2014-12-04)<br>See claims 1 and 10. | 5-7 |
| A | KR 10-2019-0068476 A (LG CHEM, LTD.) 18 June 2019 (2019-06-18)<br>See entire document. | 1-14 |
| A | KR 10-2019-0043856 A (LG CHEM, LTD.) 29 April 2019 (2019-04-29)<br>See entire document. | 1-14 |

☐ Further documents are listed in the continuation of Box C.          ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **23 November 2022** | **23 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 261 944 A1

**INTERNATIONAL SEARCH REPORT**
Information on patent family members

| International application No. |
| --- |
| **PCT/KR2022/011577** |

| Patent document cited in search report | | | Publication date (day/month/year) | Patent family member(s) | | | Publication date (day/month/year) |
| --- | --- | --- | --- | --- | --- | --- | --- |
| KR | 10-2018-0114061 | A | 17 October 2018 | CN | 108701825 | A | 23 October 2018 |
| | | | | CN | 108701825 | B | 11 June 2021 |
| | | | | CN | 113380982 | A | 10 September 2021 |
| | | | | EP | 3407408 | A1 | 28 November 2018 |
| | | | | EP | 3407408 | A4 | 23 October 2019 |
| | | | | JP | 2017-152358 | A | 31 August 2017 |
| | | | | JP | 6596405 | B2 | 23 October 2019 |
| | | | | TW | 201810780 | A | 16 March 2018 |
| | | | | TW | I770006 | B | 11 July 2022 |
| | | | | US | 10833323 | B2 | 10 November 2020 |
| | | | | US | 2019-0214637 | A1 | 11 July 2019 |
| KR | 10-1020909 | B1 | 09 March 2011 | CN | 101356670 | A | 28 January 2009 |
| | | | | CN | 101356670 | B | 10 November 2010 |
| | | | | EP | 1978580 | A1 | 08 October 2008 |
| | | | | EP | 1978580 | A4 | 22 July 2009 |
| | | | | EP | 1978580 | B1 | 27 October 2010 |
| | | | | JP | 2009-086411 | A1 | 18 June 2009 |
| | | | | JP | 4027966 | B2 | 26 December 2007 |
| | | | | KR | 10-2008-0060296 | A | 01 July 2008 |
| | | | | US | 2009-0117472 | A1 | 07 May 2009 |
| | | | | US | 8110307 | B2 | 07 February 2012 |
| | | | | WO | 2007-086411 | A1 | 02 August 2007 |
| JP | 2014-532267 | A | 04 December 2014 | CN | 103891014 | A | 25 June 2014 |
| | | | | CN | 103891014 | B | 15 February 2017 |
| | | | | CN | 104316822 | A | 28 January 2015 |
| | | | | CN | 104316822 | B | 13 June 2017 |
| | | | | EP | 2772969 | A1 | 03 September 2014 |
| | | | | EP | 2772969 | A4 | 08 April 2015 |
| | | | | JP | 5977831 | B2 | 24 August 2016 |
| | | | | KR | 10-1437074 | B1 | 02 September 2014 |
| | | | | KR | 10-2013-0045212 | A | 03 May 2013 |
| | | | | US | 2014-0170485 | A1 | 19 June 2014 |
| | | | | US | 9315882 | B2 | 19 April 2016 |
| | | | | WO | 2013-062313 | A1 | 02 May 2013 |
| KR | 10-2019-0068476 | A | 18 June 2019 | CN | 110800142 | A | 14 February 2020 |
| | | | | CN | 110800142 | B | 05 August 2022 |
| | | | | EP | 3675250 | A1 | 01 July 2020 |
| | | | | EP | 3675250 | A4 | 25 November 2020 |
| | | | | KR | 10-2293359 | B1 | 24 August 2021 |
| | | | | US | 11296312 | B2 | 05 April 2022 |
| | | | | US | 2020-0112019 | A1 | 09 April 2020 |
| | | | | US | 2022-0181602 | A1 | 09 June 2022 |
| | | | | WO | 2019-112390 | A1 | 13 June 2019 |
| KR | 10-2019-0043856 | A | 29 April 2019 | CN | 111133613 | A | 08 May 2020 |
| | | | | CN | 111133613 | B | 23 August 2022 |
| | | | | EP | 3675247 | A2 | 01 July 2020 |
| | | | | EP | 3675247 | A4 | 04 November 2020 |
| | | | | KR | 10-2308723 | B1 | 05 October 2021 |
| | | | | US | 2020-0313173 | A1 | 01 October 2020 |
| | | | | WO | 2019-078690 | A2 | 25 April 2019 |

Form PCT/ISA/210 (patent family annex) (July 2022)

**INTERNATIONAL SEARCH REPORT**
Information on patent family members

International application No.

**PCT/KR2022/011577**

| Patent document cited in search report | Publication date (day/month/year) | Patent family member(s) | | Publication date (day/month/year) |
|---|---|---|---|---|
| | | WO 2019-078690 A3 | | 06 June 2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210107522
- KR 1020220014132
- KR 100794192